# EUROPÄISCHE PATENTSCHRIFT

(11) **EP 0 588 069 B1**
(45) Veröffentlichungstag und Bekanntmachung des Hinweises auf die Patenterteilung: **15.05.1996**
(21) Anmeldenummer: 93113019.9
(22) Anmeldetag: 13.08.1993
(51) Int. Cl.: F25B 39/02, F22B 37/22

(54) **Vorrichtung zum Verteilen eines strömenden Flüssigkeits-Gas-Gemisches in mehrere Teilströme**
Apparatus for dividing a stream of liquid-gas mixture into a multitude of partial streams
Dispositif pour diviser un courant d'un mélange liquide-gaz en plusieurs courants partiels

(30) Priorität: 20.08.1992 DE 4227598
(43) Veröffentlichungstag der Anmeldung: 23.03.1994
(73) Patentinhaber: KÜBA KÄLTETECHNIK GmbH, D-82065 Baierbrunn (DE)
(72) Erfinder: Jyrek, Paul, D-82547 Eurasburg (DE)
(74) Vertreter: Finsterwald, Manfred, Dipl.-Ing., Dipl.-Wirtsch.-Ing.

(56) Entgegenhaltungen:
- EP-A- 0 126 346
- DE-A- 2 731 279
- US-A- 2 953 906

## Beschreibung

Die Erfindung betrifft eine Vorrichtung zum Verteilen eines strömenden Flüssigkeits-Gas-Gemisches in mehrere Teilströme mit vorgebbaren Verhältnissen von Flüssigkeits-zu-Gasmassenstrom, bestehend aus einem als geschlossener Behälter ausgebildeten Abscheider, in den eine zur Behälterachse koaxiale Zuführleitung für das Gemisch mündet, und in den sich mehrere zur Behälterachse parallele Abführleitungen für die Teilströme erstrecken, wobei die Zuführ- und die Abführleitungen in einer Höhe oberhalb des Flüssigkeitsspiegels im Abscheider enden und in den Abführleitungen sowohl oberhalb als auch unterhalb des Flüssigkeitsspiegels Durchtrittsöffnungen vorhanden sind.

Bei vielen technischen Anlagen ist es erforderlich, ein strömendes Flüssigkeits-Gas-Gemisch in mehrere Teilströme zu unterteilen, die vorgebbare Verhältnisse von Flüssigkeits-zu-Gasmassenstrom aufweisen.

In der Praxis entstehen bei dieser Aufteilung jedoch erhebliche Schwierigkeiten, da je nach Massenstrom und Gasgehalt des Gemisches und je nach den Stoffeigenschaften der beiden Phasen die Zweiphasenströmung verschiedene Störmungsformen, zum Beispiel eine ebene oder wellige Strömungsform, annimmt und demgemäß die beiden Phasen über den jeweiligen Strömungsquerschnitt nicht gleichmäßig verteilt sind.

Eine weitere Schwierigkeit bei der Aufteilung eines Flüssigkeits-Gas-Gemisches in mehrere insbesondere gleiche Teilströme resultiert daraus, daß bei vielen Anwendungsfällen die an die Teilstromleitungen angeschlossenen Verbraucher unterschiedliche Widerstände aufweisen und diesem Sachverhalt bei der Aufteilung des strömenden Flüssigkeits-Gas-Gemisches nur schwer Rechnung getragen werden kann.

Aus der DE-OS 24 60 214 ist eine Vorrichtung zur Aufteilung eines strömenden Flüssigkeits-Gas-Gemisches in mehrere Teilströme bekannt, bei der das Flüssigkeits-Gas-Gemisch tangential in einen Abscheider eingeleitet wird, der im oberen Bereich mit Abführleitungen für Gas-Teilströme und im unteren Bereich mit Abführleitungen für Flüssigkeits-Teilströme ausgestattet ist. Diese Abführleitungen sind außerhalb des Abscheiders paarweise zusammengeführt. Mit einem solchen Abscheider ist es aufgrund der sich stets einstellenden Strömungsturbulenzen nicht möglich, eine ausreichende Genauigkeit und Konstanz bezüglich der einzelnen Teilströme zu gewährleisten.

Aus der US-PS 2 063 380 ist ein Kältemittelverteiler bekannt, bei dem in einem zylindrischen Behälter deckenseitig und tangential das Gemisch eingeleitet wird und mehrere Abführleitungen vorgesehen sind, die deckenseitig in den Behälter eintreten und sich bis in die Nähe von dessen Boden erstrecken. Diese Rohrleitungen sind innerhalb des Behälters mit einer Reihe übereinanderliegender Öffnungen versehen. Das freie Ende der Rohrleitungen ist abgeschrägt, so daß durch diese Enden Flüssigkeit in die Rohrleitungen eintreten kann, während das Gas über in den Rohrleitungen ausgebildete, übereinanderliegende Öffnungen eintreten soll. Auch bei dieser bekannten Anordnung ergeben sich aufgrund der sich im Behälter ausbildenden turbulenten Strömungen häufig undefinierte Aufteilungen des Flüssigkeits-Gas-Gemisches.

Aus der DE-PS 27 31 279 ist eine Vorrichtung der eingangs angegebenen Art bekannt, bei der eine zur Deckenwand des Abscheiders beabstandete Zwischenwand vorgesehen ist, welche den Abscheider in einen oberen und einen unteren Abschnitt unterteilt. In der Zwischenwand ist eine Öffnung für die Zuführleitung vorgesehen, über die das Flüssigkeits-Gas-Gemisch gegen die Deckenwand geleitet wird. In dem Bereich zwischen Deckenwand und Zwischenwand beginnt die Trennung der flüssigen Phase von der festen Phase, wobei die Flüssigkeit und das Gas durch einen Ringspalt zwischen der Zwischenwand und der Umfangswandung des Abscheiders nach unten gelangt und das Gas in die unterhalb der Zwischenwand gelegenen Gasabführleitungen eintreten kann, während die Flüssigkeit sich im unteren Bereich des Behältnisses sammelt. Diese bekannte Vorrichtung hat sich in der Praxis insbesondere als Kältemittelverteiler bewährt und erfüllt die auf diesem Gebiet bestehenden Forderungen hinsichtlich der Genauigkeit der Teilstrombildungen.

Aufgabe der vorliegenden Erfindung ist es, die eingangs definierte Vorrichtung weiter zu verbessern, und zwar insbesondere unter gleichzeitiger Verringerung des fertigungstechnischen Aufwands und unter Verkleinerung des für eine bestimmte Leistung erforderlichen Bauvolumens.

Gelöst wird diese Aufgabe nach der Erfindung im wesentlichen dadurch, daß die freien Enden der durch die Bodenwand des Abscheiders geführten Abführleitungen für die Teilströme im wesentlichen U-förmig gekrümmt ausgebildet sind und mit ihren der Deckenwand des Abscheiders mit Abstand gegenüberliegenden Krümmungsbereichen für das direkt oder indirekt auftreffende Flüssigkeits-Gas-Gemisch einen phasentrennenden Prallschirm bilden.

Durch die konsequente Trennung der flüssigen Phase von der gasförmigen Phase und die Aufrechterhaltung dieser Trennung bis zur jeweils exakt getrennten Zuführung eines Gasteilstromes und eines Flüssigkeitsteilstromes in eine bestimmte Abführleitung wird praktisch eine vollständige Unabhängigkeit von den auftretenden Strömungsformen und den daraus resultierenden Störeinflüssen bei der Aufteilung erhalten. Wesentlich ist bei der erfindungsgemäßen Lösung, daß die Abführleitungen gleichzeitig zur Bildung eines offenen Prallschirmes genutzt werden, wodurch sich einerseits ein optimal großer Entspannungsraum und damit eine Verbesserung der Beruhigung des Strömungsgemisches erzielen läßt und andererseits durch diesen speziellen Prallschirm eine Vielzahl unterschiedlich gerichteter Aufprall-Teilflächen zur Verfügung steht, die einen sehr ausgeprägten Trenneffekt zur Folge haben. Der erreichte Impulsabbau führt dazu, daß die Geschwindigkeit des Flüssigkeits-Gas-Gemisches sehr schnell und sehr ausgeprägt reduziert wird, was sicherstellt, daß ein Auftreffen von Flüssigkeit mit großer Geschwindigkeit auf den bodenseitig vorhandenen Flüssigkeitsvorrat praktisch ausgeschaltet und damit auch die Gefahr des Aufbrodelns und Schäumens des Flüssigkeitsvorrats beseitigt wird, was sonst zur Folge haben kann, daß schlechtere Verteilungsergebnisse erzielt werden.

Durch die U-förmige Krümmung der Abführleitungen und die Prallschirmbildung mittels dieser Abführleitungen ist sichergestellt, daß die Gas-Eintrittsöffnungen am Ende der jeweiligen Abführleitungen sich in einer gegen ein Eintreten von Flüssigkeit bestmöglich geschützten Position befinden, wobei die Strömungsgeschwindigkeiten im Bereich der Gas-Einlaßöffnung dieser aus vergleichsweise dünnen Röhrchen bestehenden Abführleitungen so gering ist, daß praktisch keine Gefahr eines Mitreißens von Flüssigkeit besteht.

Die Zuführung des Flüssigkeits-Gas-Gemisches kann sowohl durch die Bodenseite des Behältnisses als auch durch die Deckseite erfolgen, wobei im Falle der bodenseitigen Zuführung der Prallschirm indirekt und im Falle der deckenseitigen Zuführung direkt mit dem Flüssigkeits-Gas-Gemisch beaufschlagt wird.

Besonders vorteilhafte Ausgestaltungen der Vorrichtung nach der Erfindung sind in den Unteransprüchen angegeben.

Nachfolgend wird die Erfindung anhand von Ausführungsbeispielen unter Bezugnahme auf die Zeichnung erläutert; in der Zeichnung zeigen:
- Die Figuren 1 und 2: schematische Längsschnittdarstellungen zweier Ausführungsvarianten der Erfindung mit bodenseitiger Zuführung des Flüssigkeits-Gas-Gemisches, und
- die Figuren 3 und 4: zwei weitere Ausführungsvarianten der Erfindung mit deckenseitiger Zuführung des Flüssigkeits-Gas-Gemisches.

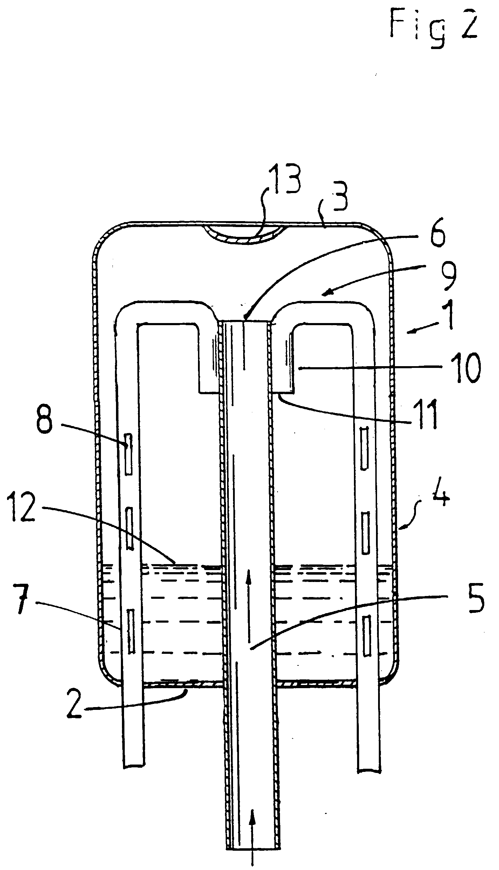

Figur 2 zeigt einen aus einem geschlossenen Behälter 1 bestehenden Abscheider mit einer Bodenwand 2, einer Deckenwand 3 und einer Umfangswand 4, wobei dieser Behälter 1 vorzugsweise als zylindrischer Behälter ausgeführt ist und Bodenwand 2 und Deckenwand 3 mit der Umfangswand 4 insbesondere verlötet sind.

Eine Gemisch-Zuführleitung 5 erstreckt sich zentrisch durch die Bodenwand 2 und endet mit einem vorgebbaren Abstand von der Deckenwand 3, so daß über die Mündung 6 austretendes Gemisch gegen die Deckenwand 3 prallt, wobei von wesentlicher Bedeutung ist, daß für das Gemisch nach dem Verlassen der Zuführleitung 5 ein großer Entspannungsraum zur Verfügung steht, der zu einer sehr schnellen und starken Verringerung der Strömungsgeschwindigkeit dieses Gemisches, zu einer Begünstigung des Impulsabbaus und damit zu einer schnellen Beruhigung des Strömungsgemisches beiträgt.

Eine Mehrzahl von Abführleitungen 7 ist über den Umfang der Bodenwand verteilt durch diese in den Innenraum des Behälters 1 geführt, und zwar mit einem vorgebbaren Abstand zur Umfangswand 4. Diese Abführleitungen 7, die im Vergleich zur Zuführleitung 5 einen deutlich geringeren freien Stromungsquerschnitt aufweisen, erstrecken sich etwa gleich weit in den Behälter 1 wie die Gemisch-Zuführleitung 5 und sind in Höhe der Mündung 6 der Zuführleitung 5 U-förmig gekrummt, so daß die dabei erhaltenen Krümmungsbereiche 9 dieser Abführleitungen 7 sich nach Art radialer Speichen bis zur Zuführleitung 5 erstrecken und mit ihren nach unten gerichteten Endabschnitten 10 an dieser Zuführleitung anliegen, bzw. vorzugsweise mit dieser fest verbunden sind. Die Gas-Eintrittsöffnungen 11 am Ende der Rohrabschnitte 10 befinden sich in geschützter Position, und auf diese Weise wird auch sichergestellt, daß in diese Abführleitungen im Trennraum ausschließlich Gas eintritt und der geforderte Flüssigkeitsanteil erst über die in allen diesen Abführleitungen 7, vorzugsweise in Schlitzform vorgesehenen Durchtrittsöffnungen 8 im bodenseitigen Flüssigkeitsbereich im gewünschten Ausmaß eintreten kann.

Gegenüber der Mündung 6 der Zuführleitung 5 kann an der Deckenwand 3 ein Schrägflächenbereich 13 ausgebildet und so gestaltet sein, daß nach unten umgelenkte Flüssigkeit auf bevorzugte Bereiche des speichenförmigen Prallschirms auftrifft. Zweckmäßigerweise wird der Flüssigkeits-Gas-Strom durch diesen Schrägflächenbereich 13 aufgeweitet, was die Trennung der flüssigen Phase von der gasförmigen Phase begünstigt.

Da jegliche Strömungseinschnürung aufgrund der Ausgestaltung des Prallschirms vermieden und damit der Innenraum des Behälters 1 in vollem Umfange als Entspannungsraum genutzt werden kann, tritt auch unter ungünstigen Betriebsbedingungen kein störendes Auftreffen von Flüssigkeit mit noch vergleichsweise hoher Geschwindigkeit auf die einen variablen Flüssigkeitsspiegel 12 aufweisende Flüssigkeitsmenge im Bodenbereich des Behälters 1 auf, und damit werden auch Aufwirbelungen und Aufschäumeffekte vermieden, die die Verteilungsgüte ungünstig beeinflussen könnten.

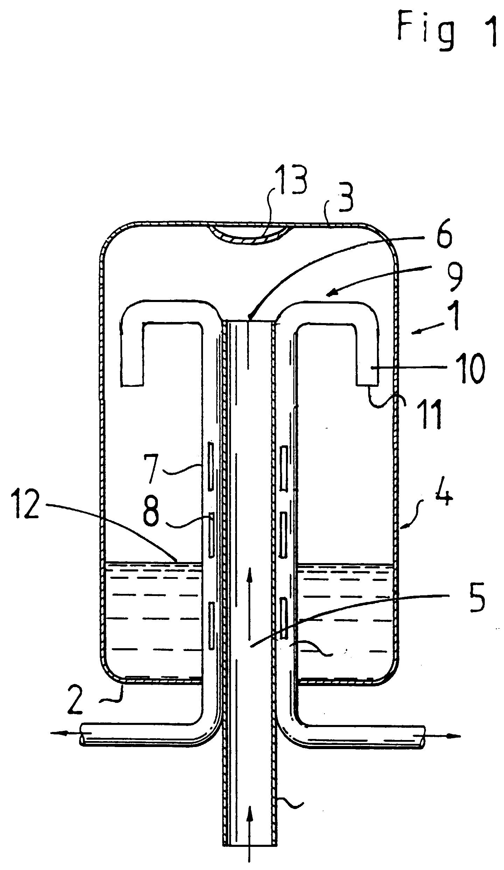

Die Ausführungsform nach Figur 1 unterscheidet sich von dem Ausführungsbeispiel nach Figur 2 im wesentlichen nur dadurch, daß die Abführleitungen 7 nicht randseitig in den Behälter 1 eingeführt sind, sondern unmittelbar benachbart der Gemisch-Zuführleitung 5. Vorzugsweise können die Abführleitungen 7 mit dieser einen größeren Strömungsquerschnitt aufweisenden Gemisch-Zuführleitung 5 fest verbunden sein. In Höhe der Mündungsöffnung 6 der Zuführleitung 5 sind die die Abführleitungen 7 bildenden Röhrchen wiederum U-förmig gebogen, so daß sich ein offener Prallschirm aus in Radialrichtung verlaufenden Röhrchen bildet, wobei die im wesentlichen vertikal nach unten gerichteten Endabschnitte 10 bezüglich der Umfangswandung 4 einen vorgebbaren Abstand aufweisen und dieser Abstand auch gering gewählt werden kann, ohne daß dadurch störende Störmungsverengungen auftreten würden.

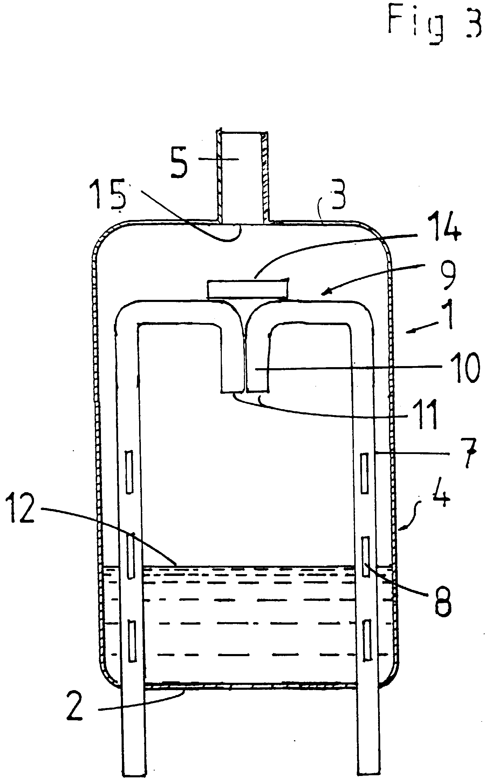

Figur 3 zeigt eine Ausführungsform der Erfindung, bei der das Flüssigkeits-Gas-Gemisch über eine deckenseitig mündende Leitung 5 zugeführt wird.

Die Abführleitungen 7 sind analog dem Ausführungsbeispiel nach Figur 2 in den Behälter randseitig eingeführt, wobei jedoch die Krümmungsbereiche 9 so dimensioniert sind, daß durch das U-förmige Umbiegen der freien Enden der Abführleitungen 7 die Endabschnitte 10 möglichst direkt aneinanderliegen und ein Bündel bilden. Auch bei dieser Ausführungsform wird eine offene Prallwand mit radialspeichenartigen Prallelementen gebildet. Gegenüber der Mündungsöffnung 15 der Gemisch-Zuführleitung 5 kann gegebenenfalls eine mit den speichenartig verlaufenden Abführleitungen 7 im Krümmungsbereich 9 fest verbundene Prallplatte 14 vorgesehen sein. Mittels einer solchen Prallplatte 14, die einen sehr geringen Durchmesser besitzen kann, ist es insbesondere möglich, eine eventuell störende mittige Durchgangsöffnung im Bündel der Endabschnitte 12 der Abführleitungen 7 zu verschließen.

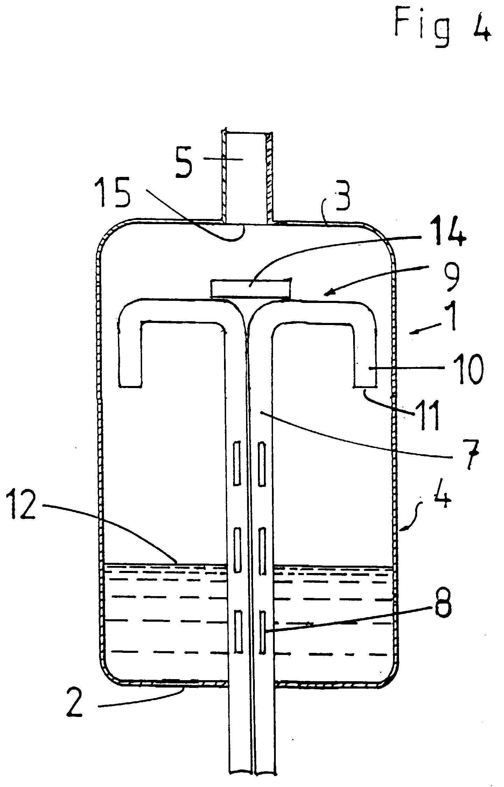

Das Ausführungsbeispiel nach Figur 4 unterscheidet sich von der Ausführungsform nach Figur 3 analog dem Unterschied zwischen den Ausführungsformen nach den Figuren 1 und 2 dadurch, daß die Abführleitungen 7 zentral durch die Bodenwand 2 geführt und im Bereich ihrer oberen Enden U-förmig gekrümmt und in Form von radial verlaufenden Krümmungsbereichen 9 nach außen und unten geführt sind.

Funktionell sind alle dargestellten Ausführungsbeispiele unmittelbar miteinander vergleichbar, und sie gewährleisten stets unabhängig von den jeweils vorliegenden Strömungsformen eine genau vorgebbare Aufteilung eines Flüssigkeits-Gas-Gemisches in mehrere definierte, in den Abführleitungen gebildete Teilströme.

### Bezugszeichenliste

- 1: Behälter
- 2: Bodenwand
- 3: Deckenwand
- 4: Umfangswand
- 5: Gemisch-Zuführleitung
- 6: Mündung der Gemisch-Zuführleitung
- 7: Abführleitung
- 8: Durchtrittsöffnung
- 9: Krümmungsbereich
- 10: Endabschnitt
- 11: Gas-Eintrittsöffnung
- 12: Flüssigkeitsspiegel
- 13: Schrägflächenbereich
- 14: Prallplatte
- 15: Mündungsöffnung

## Patentansprüche

1. Vorrichtung zum Verteilen eines strömenden Flüssigkeits-Gas-Gemisches in mehrere Teilströme mit vorgebbaren Verhältnissen von Flüssigkeits-zu-Gasmassenstrom, bestehend aus einem als geschlossener Behälter (1) ausgebildeten Abscheider in den eine zur Behälterachse koaxiale Zuführleitung (5) für das Gemisch mündet, und in den sich mehrere zur Behälterachse parallele Abführleitungen (7) für die Teilströme erstrecken, wobei die Zuführ- und die Abführleitungen in jeweils einer Höhe oberhalb des Flüssigkeitsspiegels im Abscheider enden und in den Abführleitungen (7) sowohl oberhalb als auch unterhalb des Flüssigkeitsspiegels Durchtrittsöffnungen (8) vorhanden sind,
dadurch **gekennzeichnet**,
daß die freien Enden der durch die Bodenwand (2) des Abscheiders geführten Abführleitungen (7) für die Teilströme im wesentlichen U-förmig gekrümmt ausgebildet sind und mit ihren der Deckenwand (3) des Abscheiders mit Abstand gegenüberliegenden Krümmungsbereichen (9) für das direkt oder indirekt auftreffende Flüssigkeits-Gas-Gemisch einen phasentrennenden Prallschirm bilden.

2. Vorrichtung nach Anspruch 1,
dadurch **gekennzeichnet**,
daß die Zuführleitung (5) für das Gemisch zentrisch durch die Bodenwand (2) des Abscheiders geführt ist und die Mündung (6) dieser Zuführleitung (5) einen vorgebbaren Abstand zur Deckenwand (3) des Abscheiders aufweist, und daß die im Vergleich zur Zuführleitung (5) einen wesentlich geringeren Strömungsquerschnitt besitzenden Abführleitungen (7) benachbart der Zuführleitung (5), insbesondere an ihr anliegend, in den Abscheider geführt und etwa in Höhe der Mundung (6) der Zuführleitung (5) unter Ausbildung eines offenen Prallschirmes um etwa 180° gebogen sind, so daß die freien Endabschnitte (10) der Abführleitungen (7) im wesentlichen parallel zu der Zuführleitung (5) verlaufen.

3. Vorrichtung nach Anspruch 2,
dadurch **gekennzeichnet**,
daß die einzelnen Abführleitungen (7) in gleicher Weise gekrümmt sind, und daß ihre entgegen der Rohreintrittsrichtung verlaufenden freien Endabschnitte (10) bezüglich der Umfangswandung (4) des Abscheiders einen durch die Krümmung vorgebbaren Abstand aufweisen.

4. Vorrichtung nach Anspruch 1,
dadurch **gekennzeichnet**,
daß die Zuführleitung (5) für das Gemisch zentrisch durch die Bodenwand (2) des Abscheiders geführt ist und die Mündung (6) dieser Zuführleitung (5) einen vorgebbaren Abstand zur Deckenwand (3) des Abscheiders aufweist, und daß die einen im Vergleich zur Zuführleitung wesentlich geringeren Strömungsquerschnitt besitzenden Abführleitungen (7) randseitig in den Abscheider geführt und etwa in Höhe der Mündung (6) der Zuführleitung (5) unter Ausbildung eines offenen Prallschirmes um etwa 180° gebogen sind, wobei die freien Endabschnitte (10) der Abführleitungen (7) im wesentlichen parallel zur Zuführleitung (5) verlaufen und insbesondere an dieser anliegen und vorzugsweise mit der Zuführleitung (5) fest verbunden sind.

5. Vorrichtung nach einem der vorhergehenden Ansprüche,
dadurch **gekennzeichnet,**
daß der Gemisch-Auftreffbereich der Deckenwand (3) als symmetrischer Schragflächenbereich (13), insbesondere als den Gemischstrom aufweitender Bereich ausgebildet ist.

6. Vorrichtung nach Anspruch 1,
dadurch **gekennzeichnet,**
daß die Zuführleitung (5) für das Gemisch in der Decken(3) des Abscheiders mündet und gegenüber der Mündungsöffnung (15) mit vorgebbarem Abstand der von den Abführleitungen (7) gebildete Prallschirm angeordnet ist.

7. Vorrichtung nach Anspruch 6,
dadurch **gekennzeichnet,**
daß der Prallschirm aus den Krümmungsbereichen (9) von randseitig in den Abscheider geführten und radial zur Mitte gebogenen Abführleitungen (7) besteht.

8. Vorrichtung nach Anspruch 6,
dadurch **gekennzeichnet,**
daß der Prallschirm aus den Krümmungsbereichen (9) von bündelartig mittig in den Abscheider geführten und radial nach außen gebogenen Abführleitungen (7) besteht.

9. Vorrichtung nach Anspruch 7 oder 8,
dadurch **gekennzeichnet,**
daß unmittelbar gegenüber der Mündungsöffnung (15) der Gemisch-Zuführleitung (5) am Prallschirm eine den Zentralbereich des Prallschirms überdeckende Prallplatte (14) angebracht ist.

## Claims

1. Apparatus for dividing a flowing liquid/gas mixture into a plurality of partial flows with predeterminable ratios of the liquid mass flow to the gas mass flow, comprising a separator formed as a closed container (1) into which a supply line (5) for the mixture opens, with the supply line being coaxial to the container axis, and in which a plurality of extraction lines (7) for the partial flows extend, the extraction lines (7) being parallel to the container axis, wherein the supply line and the extraction lines respectively terminate at a level above the liquid level in the separator and wherein passage openings (8) are present in the extraction lines (7) both above and also beneath the liquid level, characterised in that the free ends of the extraction lines (7) for the partial flows are led through the base wall (2) of the separator and are formed with a substantially U-shaped curvature, with their regions of curvature (9) lying opposite to and spaced from the top wall (3) of the separator, forming a phase separating impact screen for the directly or indirectly incident liquid/gas mixture.

2. Apparatus in accordance with claim 1, characterised in that the supply line (5) for the mixture is led centrally through the base wall (2) of the separator and the mouth (6) of this supply line (5) has a predeterminable spacing from the top wall (3) of the separator, and in that the extraction lines (7), which have a substantially smaller flow cross-section in comparison to the supply line (5), are led into the separator adjacent the supply line (5), in particular contacting it, and are bent through approximately 180° at about the level of the mouth (6) of the supply line (5) while forming an open impact screen, so that the free end sections (10) of the extraction lines (7) extend substantially parallel to the supply line (5).

3. Apparatus in accordance with claim 2, characterised in that the individual extraction lines (7) are curved in the same manner, and in that their free end sections extending opposite to the tube inlet direction have a spacing with respect to the peripheral wall (4) of the separator determined by the curvature.

4. Apparatus in accordance with claim 1, characterised in that the supply line (5) for the mixture is led centrally through the base wall (2) of the separator and the mouth (6) of this supply line (5) has a predeterminable spacing from the top wall (3) of the separator; and in that the extraction lines (7) which have a substantially smaller flow cross-section in comparison to the supply line, are led into the separator at the edge and are bent through approximately 180° approximately at the level of the mouth (6) of the supply line (5) while forming an open impact screen, with the free end sections (10) of the extraction lines (7) extending substantially parallel to the supply line (5), and in particular contacting the latter, and preferably being fixedly connected to the supply line (5).

5. Apparatus in accordance with one of the preceding claims, characterised in that the region of incidence of the mixture at the top wall (3) is formed as a symmetrical inclined surface region (13), in particular as a region which spreads the flow of mixture.

6. Apparatus in accordance with claim 1, characterised in that the supply line (5) for the mixture opens into the top wall (3) of the separator and the impact screen formed by the extraction lines (7) is arranged with a predeterminable spacing opposite to the mouth opening (15).

7. Apparatus in accordance with claim 6, characterised in that the impact screen consists of the regions of curvature (9) of extraction lines (7) which are led into the separator at the edge and bent radially towards the centre.

8. Apparatus in accordance with claim 9, characterised in that the impact screen consists of the regions of curvature (9) of extraction lines (7) which are led as a bundle centrally into the separator and bent radially outwardly.

9. Apparatus in accordance with claim 7 or claim 8, characterised in that an impact plate (14) which covers over a central region of the impact screen is attached to the impact screen directly opposite to the mouth opening (15) of the mixture supply line (5).

## Revendications

1. Dispositif pour répartir un mélange de gaz et de liquide en écoulement en plusieurs écoulements partiels selon des rapports prédéterminés de débit de masse liquide/gaz, comprenant un séparateur réalisé sous forme d'un réservoir fermé (1) dans lequel débouche une conduite d'alimentation (5) pour le mélange, coaxiale à l'axe du réservoir, et dans lequel s'étendent plusieurs conduites de sortie (7) pour les écoulements partiels, parallèles à l'axe du réservoir, les conduites d'alimentation et de sortie se terminant respectivement à une hauteur au-dessus du niveau de liquide dans le séparateur, et des ouvertures de passage (8) étant prévues dans les conduites de sortie (7) tant au-dessus qu'au-dessous du niveau de liquide, caractérisé en ce que les extrémités libres des conduites de sortie (7) pour les écoulements partiels, qui traversent la paroi de fond (2) du séparateur au centre, sont réalisées de façon incurvée sensiblement en forme de U, et forment pour le mélange liquide/gaz qui arrive directement ou indirectement un écran d'impact à séparation de phases par leur région (9) qui fait face à distance de la paroi de plafond (3) du séparateur.

2. Dispositif selon la revendication 1, caractérisé en ce que la conduite d'alimentation (5) pour le mélange traverse au centre la paroi de fond (2) du séparateur, et l'embouchure (6) de cette conduite d'alimentation (5) est située à une distance prédéterminée de la paroi de plafond (3) du séparateur, et en ce que les conduites de sortie (7), qui possèdent par comparaison à la conduite d'alimentation (5) une section d'écoulement nettement plus faible, sont guidées dans le séparateur au voisinage de la conduite d'alimentation (5), en particulier en contact contre celle-ci, et sont incurvées approximativement à hauteur de l'embouchure (6) de la conduite d'alimentation (5) sur environ 180° en formant un écran d'impact ouvert, de sorte que les tronçons extrémités libres (10) des conduites de sortie (7) s'étendent sensiblement parallèlement à la conduite d'alimentation (5).

3. Dispositif selon la revendication 2, caractérisé en ce que les conduites de sortie individuelles (7) sont incurvées de la même manière, et en ce que leurs tronçons d'extrémité libres (10) qui s'étendent en sens opposés à la direction d'entrée dans les tubes présentent par rapport à la paroi périphérique (4) du séparateur une distance prédéterminée par la courbure.

4. Dispositif selon la revendication 1, caractérisé en ce que la conduite d'alimentation (5) pour le mélange traverse la paroi de fond (2) du séparateur au centre, et l'embouchure (6) de cette conduite d'alimentation (5) présente une distance prédéterminée par rapport à la paroi de plafond (3) du séparateur, et en ce que les conduites de sortie (7), qui possèdent par comparaison à la conduite d'alimentation une section d'écoulement nettement plus faible, sont guidées dans le séparateur du côté de la bordure, et sont recourbées approximativement à la hauteur de l'embouchure (6) de la conduite d'alimentation (5) sur environ 180° en formant un écran d'impact ouvert, les tronçons d'extrémité libres (10) des conduites de sortie (7) s'étendant sensiblement parallèlement à la conduite d'alimentation (5), et sont en particulier contact contre celle-ci, et sont de préférence fermement reliés à la conduite d'alimentation (5).

5. Dispositif selon l'une quelconque des revendications précédentes, caractérisé en ce que la zone d'arrivée du mélange sur la paroi de plafond (3) est réalisée sous la forme d'une région en pente oblique symétrique (13), en particulier d'une région qui élargit le courant de mélange.

6. Dispositif selon la revendication 1, caractérisé en ce que la conduite d'alimentation (5) pour le mélange débouche dans la paroi de plafond (3) du séparateur et est agencée en vis-à-vis de l'ouverture d'embouchure (15) avec une distance prédéterminée de l'écran d'impact formé par les conduites de sortie (7).

7. Dispositif selon la revendication 6, caractérisé en ce que l'écran d'impact est constitué par les régions incurvées (9) des conduits de sortie (7) guidés du côté de la bordure dans le séparateur et recourbées radialement vers le milieu.

8. Dispositif selon la revendication 6, caractérisé en ce que l'écran d'impact est constitué par les régions incurvées (9) des conduits de sortie (7) guidés en faisceau au centre dans le séparateur et recourbées radialement vers l'extérieur.

9. Dispositif selon l'une ou l'autre des revendications 7 et 8, caractérisé en ce qu'il est prévu sur l'écran d'impact une plaque d'impact (14) qui recouvre la région centrale de l'écran d'impact directement vis-à-vis de l'ouverture d'embouchure (15) de la conduite d'alimentation de mélange (5).
